# EUROPEAN PATENT APPLICATION

(11) **EP 4 672 421 A1**
(43) Date of publication of application: **31.12.2025**
(21) Application number: 24913271.3
(22) Date of filing: 30.08.2024
(51) Int. Cl.: H01M 10/42, H01M 10/04, B23K 31/12, B23K 101/36

(54) **CYLINDRICAL BATTERY CELL INSPECTION DEVICE AND CYLINDRICAL BATTERY CELL PRODUCED USING SAME, AND BATTERY PACK AND VEHICLE COMPRISING CYLINDRICAL BATTERY CELL**

(30) Priority: 27.12.2023 KR 20230193480; 22.02.2024 KR 20240025732
(71) Applicant: LG Energy Solution, Ltd., Seoul 07335 (KR)
(72) Inventor: KIM, Ji-Won, Daejeon 34122 (KR); KIM, Tae-Young, Daejeon 34122 (KR)
(74) Representative: Goddar, Heinz J.
(86) International application number: PCT/KR2024/013064
(87) International publication number: WO 2025/143430

(57) **Abstract**

Disclosed are a cylindrical-battery cell inspection device, a cylindrical battery cell produced using the same, and a battery pack and a vehicle including the cylindrical battery cell. A cylindrical-battery cell inspection device according to an embodiment of the present disclosure includes: a main body through which a cylindrical battery cell moves; a plurality of mirror members coupled to the main body and configured to reflect light reflected from an inspection position of the cylindrical battery cell; and a photographing member configured to capture the cylindrical battery cell using the light reflected by the mirror members.

## Description

### TECHNICAL FIELD

This application is based on and claims priority from Korean Patent Application No. 10-2023-0193480, filed on December 27, 2023, and Korean Patent Application No. 10-2024-0025732, filed on February 22, 2024, with the Korean Intellectual Property Office, the disclosure of which is incorporated herein in its entirety by reference.

The present disclosure relates to a cylindrical-battery cell inspection device, a cylindrical battery cell produced using the same, and a battery pack and a vehicle including the cylindrical battery cell, and more specifically, to a cylindrical-battery cell inspection device capable of accurately inspecting a cylindrical battery cell, a cylindrical battery cell produced using the same, and a battery pack and a vehicle including the cylindrical battery cell.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

Current secondary batteries widely used include lithium-ion batteries, lithium-polymer batteries, nickel-cadmium batteries, nickel-hydrogen batteries, nickel-zinc batteries, and the like. The operating voltage of this unit secondary battery cell is approximately 2.5V to 4.5V.

Therefore, when an output voltage higher than this is required, a battery module or a battery pack may be configured by connecting a plurality of battery cells in series. In addition, a battery module or a battery pack may be configured by connecting multiple battery cells in parallel depending on the required charge/discharge capacity. Accordingly, the number of battery cells included in the battery module or battery pack or electrical connections thereof may be set in various ways depending on the required output voltage or charge/discharge capacity.

Cylindrical, prismatic, and pouch-type battery cells are known as types of secondary battery cells. In the case of a cylindrical battery cell, a jellyroll-type electrode assembly is formed by winding a positive electrode plate, a negative electrode plate, and a separator, which is an insulator, interposed therebetween, and then the electrode assembly is inserted into a battery can together with an electrolyte to form a battery. In addition, a current collector plate may be used to electrically connect the positive electrode plate and the negative electrode plate in the cylindrical battery cell.

The cylindrical battery cell among the battery cells that constitute a conventional battery module or battery pack has a risk related to the product quality such as occurrence of back-beads due to overwelding during the welding process.
when a product is overwelded, back-beads occur on the back side of the product to penetrate the welded body, which are used as a basis for judging overwelding. In cylindrical battery cells, back-beads may occur due to the overwelding in a beading portion.

However, the conventional welding process of cylindrical battery cells does not provide a method for comprehensive inspection when the back-beads occur, so that overwelding is determined according to the back-beads only through visual inspection by partial sampling, thereby causing a problem with low inspection accuracy.

Therefore, a method is required to improve the inspection accuracy for welding quality during the welding process of cylindrical battery cells.

### DISCLOSURE

### Technical Problem

The present disclosure is designed to solve the problems of the related art, and therefore the present disclosure is directed to providing a cylindrical-battery cell inspection device capable of improving inspection accuracy, a cylindrical battery cell produced using the same, and a battery pack and a vehicle including the cylindrical battery cell.

In addition, the present disclosure is also to provide a cylindrical-battery cell inspection device capable of reducing process time and increasing process efficiency, a cylindrical battery cell produced using the same, and a battery pack and a vehicle including the cylindrical battery cell.

In addition, the present disclosure is also to provide a cylindrical-battery cell inspection device capable of reducing process costs and improving cost competitiveness, a cylindrical battery cell produced using the same, and a battery pack and a vehicle including the cylindrical battery cell.

In addition, the present disclosure is also to provide a cylindrical-battery cell inspection device capable of improving device compatibility, a cylindrical battery cell produced using the same, and a battery pack and a vehicle including the cylindrical battery cell.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there may be provided a cylindrical-battery cell inspection device including: a main body through which a cylindrical battery cell moves; a plurality of mirror members coupled to the main body and configured to reflect light reflected from an inspection position of the cylindrical battery cell; and a photographing member configured to capture the cylindrical battery cell using the light reflected by the mirror members.

In an embodiment, the main body may include: a bottom part into which the cylindrical battery cell moves; a connection part connected to the bottom part; and a head part coupled to a top of the connection part and having the photographing member coupled thereto.

In an embodiment, a bottom slope may be formed on a side of the bottom part downward from an outer side to an inner side, and a bottom mirror member of the plurality of mirror members may be coupled to the bottom slope.

In an embodiment, the bottom slope may be formed to have an angle at which the photographing member is able to capture a beading portion of the cylindrical battery cell.

In an embodiment, the head part may include a head mirror member coupled to reflect light reflected from the bottom mirror member toward the photographing member.

In an embodiment, the head part may include: a head slope formed at a position corresponding to the bottom slope; and a head-slope coupling portion coupled to the head slope and disposed to face the photographing member.

In an embodiment, the head mirror member comprises: a first mirror member coupled to the head slope; and a second mirror member coupled to the head-slope coupling portion, and light reflected from the inspection position of the cylindrical battery cell may be reflected by the bottom mirror member, thereby traveling to the first mirror member, reflected by the first mirror member, thereby traveling to the second mirror member, and reflected by the second mirror member, thereby reaching the photographing member.

In an embodiment, the cylindrical-battery cell inspection device may further include a lighting part coupled to the connection part.

In an embodiment, the guide may be a guide wall formed as a protruding structure toward the inside of the bottom part.

In an embodiment, the guide wall may be formed as a curved surface.

In an embodiment, the cylindrical-battery cell inspection device may further include a disk member on which the cylindrical battery cell is seated and rotates so that the cylindrical battery cell moves to the main body.

In an embodiment, the cylindrical battery cell may be configured to temporarily stop inside the main body and then rotate on its own about a center of the cylindrical battery cell.

According to another aspect of the present disclosure, there may be provided a cylindrical battery cell produced using the cylindrical-battery cell inspection device described above, a battery pack including at least one cylindrical battery cell described above, and a vehicle including at least one cylindrical battery cell described above.

### Advantageous Effects

The embodiments of the present disclosure have the effect of improving inspection accuracy.

In addition, the embodiments of the present disclosure have the effect of reducing process time and increasing process efficiency.

In addition, the embodiments of the present disclosure have the effect of reducing process costs and improving cost competitiveness.

In addition, the embodiments of the present disclosure have the effect of increasing device compatibility.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a cylindrical-battery cell inspection device according to a first embodiment of the present disclosure.
FIG. 2 is a perspective view of the device in FIG. 1 when viewed from another direction.
FIG. 3 is a plan view of a cylindrical-battery cell inspection device according to a first embodiment of the present disclosure.
FIG. 4 is a side view of a cylindrical-battery cell inspection device according to a first embodiment of the present disclosure.
FIG. 5 is a cross-sectional view taken along line B-B' in FIG. 4, which illustrates the state where an inspection position of a cylindrical battery cell is reflected by a mirror member and captured by a photographing member.
FIG. 6 is a cross-sectional view taken along line A-A' in FIG. 1.
FIG. 7 is an enlarged view of part C in FIG. 6.
FIG. 8 is a drawing illustrating the state where an inspection position of a cylindrical battery cell is reflected by a mirror member and captured by a photographing member in a cylindrical-battery cell inspection device according to a second embodiment of the present disclosure.
FIG. 9 is a drawing schematically illustrating the configuration of a battery pack including a cylindrical battery cell produced using a cylindrical-battery cell inspection device according to respective embodiments of the present disclosure.
FIG. 10 is a drawing illustrating a vehicle including the battery pack in FIG. 9.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

The expression, used herein, "an element is 'coupled' or 'connected' to another element" should be understood that the elements may be directly coupled or connected to each other, and that the elements may be indirectly coupled or connected through a connection member.

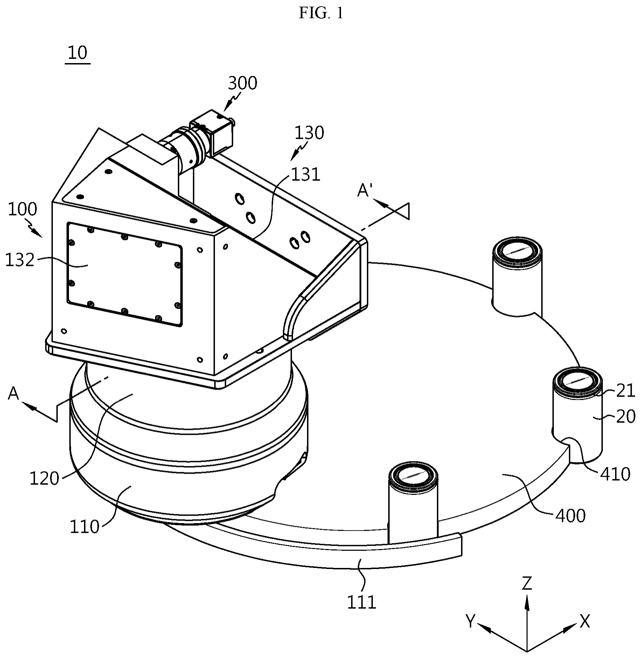

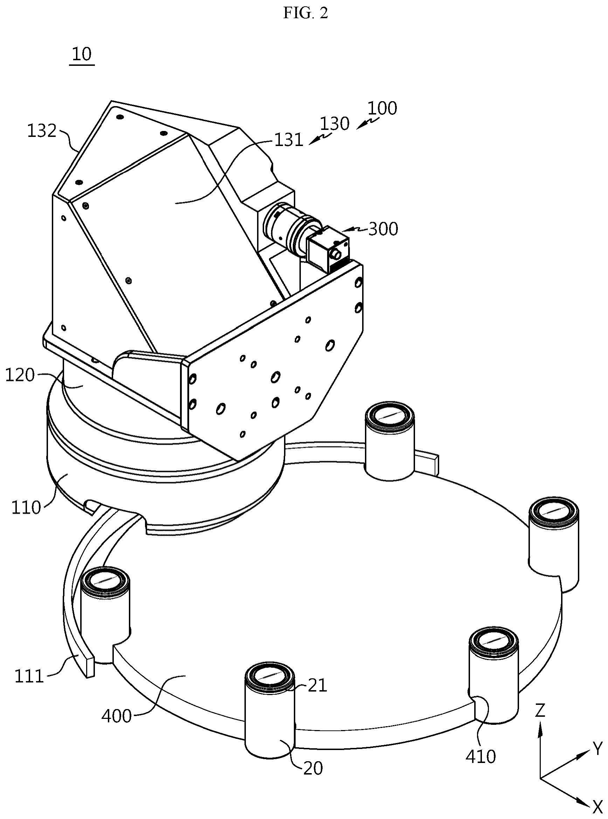

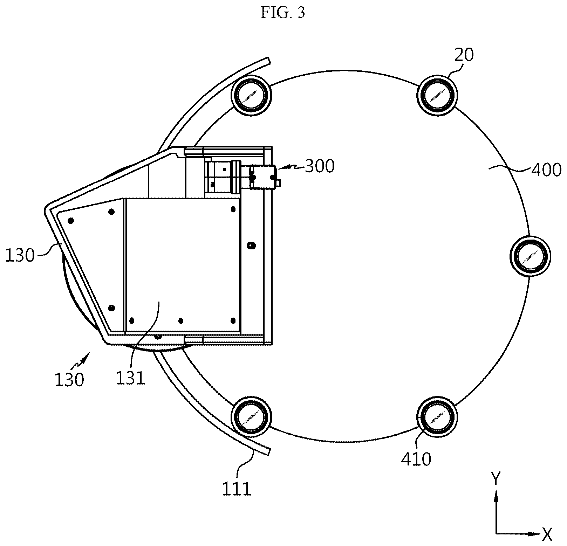

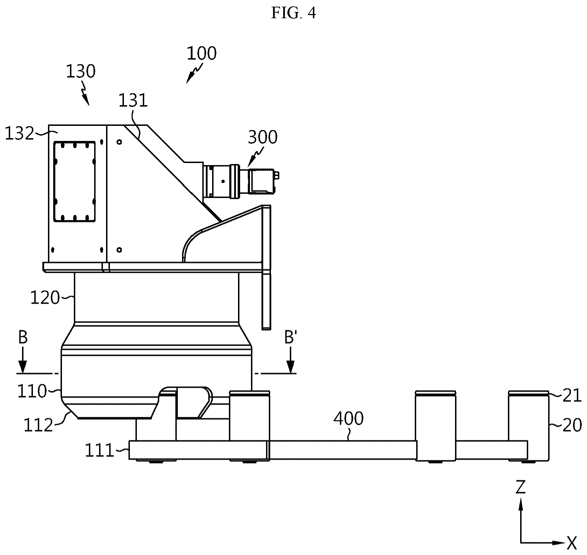

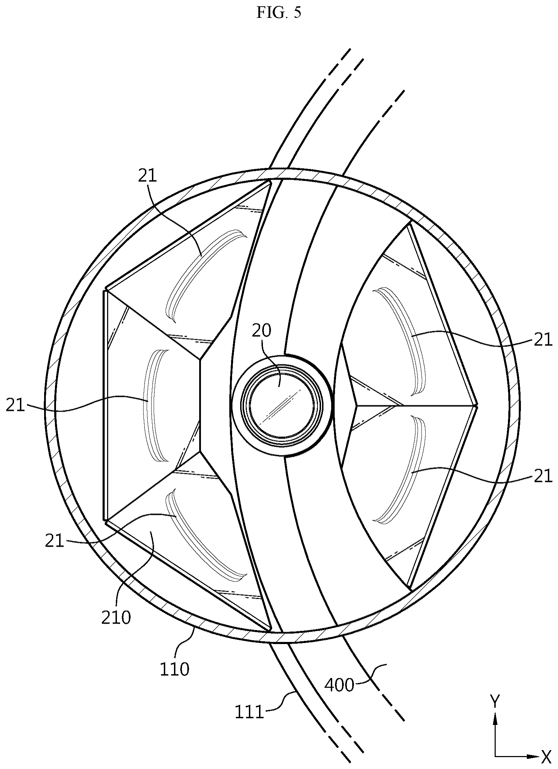

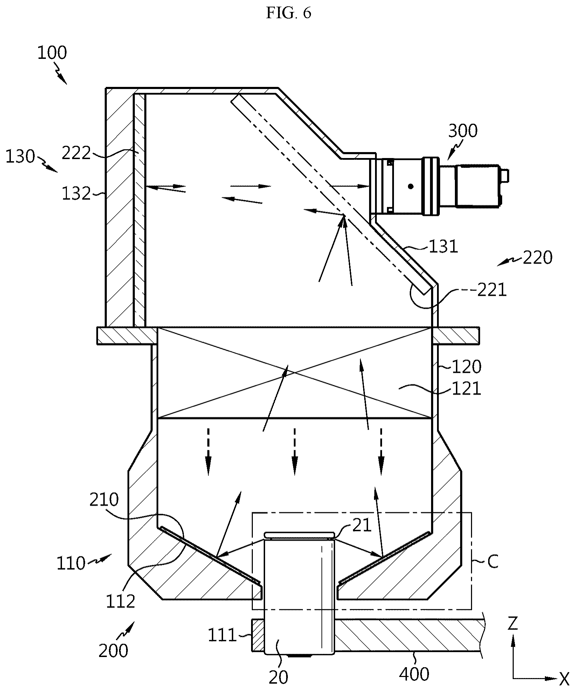

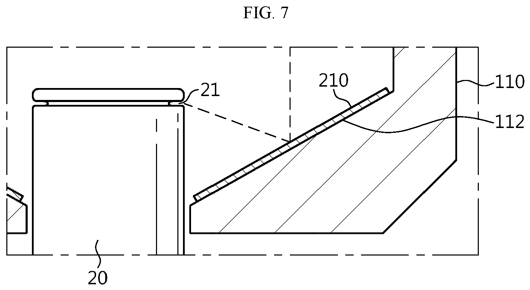

FIG. 1 is a perspective view of a cylindrical-battery cell inspection device according to a first embodiment of the present disclosure, FIG. 2 is a perspective view of the device in FIG. 1 when viewed from another direction, FIG. 3 is a plan view of a cylindrical-battery cell inspection device according to a first embodiment of the present disclosure, FIG. 4 is a side view of a cylindrical-battery cell inspection device according to a first embodiment of the present disclosure, FIG. 5 is a cross-sectional view taken along line B-B' in FIG. 4, which illustrates the state where an inspection position of a cylindrical battery cell is reflected by a mirror member and captured by a photographing member, FIG. 6 is a cross-sectional view taken along line A-A' in FIG. 1, and FIG. 7 is an enlarged view of part C in FIG. 6.

A cylindrical-battery cell inspection device 10 according to a first embodiment of the present disclosure inspects a cylindrical battery cell 20 in a manufacturing process of the cylindrical battery cell 20.

Here, the cylindrical battery cell 20 may include an electrode assembly, a battery can, and a cap plate.

The electrode assembly has a structure in which a positive electrode plate, a negative electrode plate, and a separator interposed between the positive electrode plate and the negative electrode plate are wound in one direction. In addition, the electrode assembly may be formed in a jellyroll type with a center hole formed in the center thereof.

For example, the electrode assembly may be manufactured by winding a laminate formed by sequentially stacking a negative electrode plate, a separator, a positive electrode plate, and a separator at least once. Here, the positive electrode plate and the negative electrode plate may be configured in the form of a sheet.

That is, the electrode assembly applied to the present embodiment may be a winding-type electrode assembly. In this case, an additional separator may be provided on the outer surface of the electrode assembly for insulation from the battery can. That is, the electrode assembly may be configured in any winding structure that is well known in the art without limitation.

The positive electrode plate may have a positive electrode active material applied onto one side or both sides, and a first uncoated portion, to which the positive electrode active material is not applied, may be formed at an end of the positive electrode plate. The first uncoated portion may be exposed to the outside of the separator while forming a plurality of winding turns about the center of the electrode assembly and may be used as an electrode tab. However, the first uncoated portion may not be formed on the positive electrode plate.

The negative electrode plate may have a negative electrode active material applied onto one side or both sides, and a second uncoated portion, to which the positive electrode active material is not applied, may be formed at an end of the negative electrode plate. The second uncoated portion may be exposed to the outside of the separator while forming a plurality of winding turns about the center of the electrode assembly and may be used as an electrode tab. However, the second uncoated portion may not be formed on the negative electrode plate.

Here, in the case where the positive electrode plate and the negative electrode plate include uncoated portions, respectively, the first uncoated portion and the second uncoated portion may be configured to face in the opposite directions.

In addition, any active material that is known in the art may be used as the positive electrode active material coated on the positive electrode plate and as the negative electrode active material coated on the negative electrode plate.

The separator may be configured as a porous polymer film alone made of, for example, a polyolefin polymer such as an ethylene homopolymer, a propylene homopolymer, an ethylene/butene copolymer, an ethylene/hexene copolymer, or an ethylene/methacrylate copolymer, or as a laminate thereof.

As another example, the separator may be made of a conventional porous nonwoven fabric of, for example, high-melting-point glass fiber, polyethylene terephthalate fiber, and the like.

The separator may include a coating layer of inorganic particles on at least one side thereof. In addition, the separator itself may be formed of a coating layer of inorganic particles. The particles constituting the coating layer may have a structure in which the particles are bonded with a binder so that an interstitial volume exists between adjacent particles.

In addition, the center hole of the electrode assembly is also used for welding a cell terminal (positive electrode terminal) and a positive electrode collector plate. That is, a laser beam may be radiated through the center hole of the electrode assembly to weld the cell terminal and the positive electrode collector plate.

The electrode assembly is received inside the battery can. In addition, the battery can may have a through-hole formed thereon. Here, the battery can may be formed in a cylindrical shape, so that the electrode assembly is received inside the battery can, and may be electrically connected to the negative electrode plate of the electrode assembly. Accordingly, the battery can may have the same polarity as the negative electrode plate, that is, a negative polarity.

The diameter of the battery can is configured to be greater than the diameter of the electrode assembly. A gap of a predetermined size may be formed between the battery can and the positive electrode collector plate, and an insulator may be provided in the gap.

If the size of the electrode assembly is increased while the size of the battery can is fixed according to the standard, the total capacity of the battery cell increases, but the gap between the battery can and the electrode assembly is reduced.

That is, if the size of the electrode assembly is increased in order to increase the total capacity of the battery cell, the gap between the battery can and the electrode assembly decreases, so an insulator must be provided in the reduced gap between the battery can and the electrode assembly in order to increase the capacity of the battery cell, and to this end, the insulator is preferably as thin as possible.

The battery can is substantially a cylindrical container, and may be made of a conductive material such as metal. The battery can may be made of conductive metal, such as aluminum, steel, stainless steel, or the like, but is not limited thereto.

The positive electrode current collector is electrically connected to the positive electrode plate, for example, at the top of the electrode assembly. For example, the positive electrode current collector may be made of a conductive metal material and electrically connected to the first uncoated portion of the positive electrode plate.

The cell terminal is made of a conductive metal material and is electrically connected to the positive electrode current collector. In addition, the cell terminal is electrically connected to the positive electrode plate of the electrode assembly through the positive electrode collector plate, thereby exhibiting a positive polarity.

That is, the cell terminal may function as a positive electrode terminal. In addition, the battery can may be electrically connected to the negative electrode plate of the electrode assembly as described above, thereby exhibiting a negative polarity.

The negative electrode collector plate is electrically connected to the negative electrode plate, for example, at the bottom of the electrode assembly. For example, the negative electrode collector plate may be made of a conductive metal material such as aluminum, steel, copper, or nickel and electrically connected to the second uncoated portion of the negative electrode collector plate.

The negative electrode collector plate may be electrically connected to the battery can. To this end, at least a portion of the edge of the negative electrode collector plate may be interposed between the inner surface of the battery can and the sealing gasket and fixed thereto.

In an embodiment, at least a portion of the edge of the negative electrode collector plate may be fixed to a beading portion 21 (see FIG. 7), formed at the lower end of the battery can, by welding while being supported on the lower surface of the beading portion 21.

In addition, at least a portion of the remaining of the negative electrode collector plate, excluding the coupling portion with the beading portion 21, may be coupled to a folded surface of the second uncoated portion by welding, for example, laser welding.

In addition, at least a portion of the edge of the negative electrode collector plate may be electrically coupled to the upper surface or lower surface of the beading portion 21, which is adjacent to the crimping portion.

The battery can may have a beading portion 21 and a crimping portion formed at the bottom. The beading portion 21 is formed by pressing the outer circumference of the battery can inward in an area adjacent to the opening of the battery can.

The beading portion 21 may support the electrode assembly so that the electrode assembly having a size approximately corresponding to the width of the battery can does not pop out through the opening formed at the bottom of the battery can, and may also function as a support on which the cap plate is seated. In addition, the beading portion 21 supports the outer circumferential surface of the sealing gasket.

The cap plate is configured to seal the opening formed at the bottom of the battery can. The cap plate may be made of, for example, a metal material to secure rigidity.

In addition, the cap plate may be separated from the electrode assembly not to have a polarity. That is, the cap plate may not have a polarity even if it is made of conductive metal.

The cap plate not having polarity indicates that the cap plate is electrically insulated from the battery can and the cell terminal. As described above, the cap plate may not have polarity, and does not necessarily have to be made of conductive metal.

The cap plate may be seated and supported on the beading portion 21 formed on the battery can. In addition, the cap plate is fixed by a crimping portion described below. A sealing gasket may be interposed between the cap plate and the crimping portion of the battery can to ensure airtightness of the battery can. That is, the sealing gasket may be provided to be interposed between the edge of the cap plate and the opening of the battery can.

Referring to FIG. 1 and FIG. 6, the cylindrical-battery cell inspection device 10 according to the first embodiment of the present disclosure includes a main body 100, mirror members 200, and a photographing member 300.

The main body 100 is configured such that cylindrical battery cells 20 are able to move. That is, the cylindrical battery cells 20 move inside the main body 100, so that an inspection position is inspected.

Referring to FIG. 1 and FIG. 5, the cylindrical battery cell 20 moves inside a bottom part 110 of the main body 100 along a guide 111, and the inspection position is captured and inspected by the photographing member 300 as the cylindrical battery cell 20 moves inside the bottom part 110.

Here, the inspection position of the cylindrical battery cell 20 may be the aforementioned beading portion 21, and the cylindrical-battery cell inspection device 10 according to the first embodiment of the present disclosure may be configured to inspect the welding quality of the beading portion 21.

As described above, since the beading portion 21 is formed by pressing the outer circumference of the battery can inward, it is difficult to check the welding portion of the beading portion 21 positioned on the inner side by a conventional method while the cylindrical battery cell 20 is moving. Therefore, in the past, a worker collected several samples of the cylindrical battery cells 20 and directly inspected them with the naked eye. In this case, there are problems in which the work time is delayed, in which the uniform inspection quality cannot be secured, and in which the cost increases.

However, the cylindrical-battery cell inspection device 10 according to the first embodiment of the present disclosure may continuously inspect, through the reflection of light, the welding quality of the beading portion 21 of the cylindrical battery cell 20 moving.

Referring to FIG. 1 and FIG. 6, the main body 100 may include a bottom part 110, a connection part 120, and a head part 130.

The bottom part 110 is configured such that the cylindrical battery cells 20 move to the inside of the bottom part 110. Here, the cylindrical battery cells 20 may be guided by a guide 111. That is, the cylindrical battery cells 20 move into the bottom part 110 along the guide 111.

The guide 111 guides the cylindrical battery cells 20 not to deviate from the movement path. The guide 111 may be a guide wall formed as a protruding structure toward the inside of the bottom part 110. Here, referring to FIG. 5, the guide wall may be formed as a curved surface corresponding to the circular shape of the cylindrical battery cell 20.

Referring to FIG. 6, a bottom slope 112 may be formed on the side of the bottom part 110 downward from the outer side to the inner side. A bottom mirror member 210 capable of reflecting light may be coupled to the bottom slope 112, which will be described later.

The connection part 120 is connected to the bottom part 110. In FIG. 1, the connection part 120 is located on the bottom part 110 to be connected to the bottom part 110. Referring to FIG. 6, a lighting part 121 may be coupled to the connection part 120.

The lighting part 121 is configured to emit light toward the cylindrical battery cell 20. The lighting part 121 may be configured in various ways, and may include, for example, a fluorescent lamp, an incandescent lamp, or an LED lamp. However, the configuration of the lighting part 121 is not limited thereto.

The lighting part 121 may be coupled to a part of the connection part 120. Alternatively, it may be coupled to the entire portion of the connection part 120 along the inner circumference.

The head part 130 is coupled to the top of the connection part 120 and has a photographing member 300 coupled thereto. When the cylindrical battery cell 20 moves along the guide 111, the light emitted from the lighting part 121 is incident on the inspection position of the cylindrical battery cell 20 and then reflected therefrom.

Referring to FIG. 6, the light reflected from the inspection position of the cylindrical battery cell 20 is reflected again by the bottom mirror member 210 coupled to the bottom slope 112, thereby traveling upward, and reflected by a head mirror member 220 to be described below, thereby traveling to the photographing member 300. Accordingly, the photographing member 300 may accurately capture the inspection position of the cylindrical battery cell 20.

Referring to FIG. 6, the head part 130 may have a head mirror member 220, which is coupled thereto, for reflecting light reflected from the bottom mirror member 210 toward the photographing member 300. That is, light reflected from the bottom mirror member 210 may be reflected again by the head mirror member 220 and may then reach the photographing member 300.

Referring to FIG. 2, the head part 130 may include a head slope 131 and a head-slope coupling portion 132. The head slope 131 is formed at a position corresponding to the bottom slope 112. Accordingly, light reflected from the bottom mirror member 210 coupled to the bottom slope 112 may travel to a first mirror member 221 coupled to the head slope 131.

Referring to FIG. 3, the head-slope coupling portion 132 is coupled to the head slope 131 and is disposed to face the photographing member 300. Accordingly, the light reflected by the first mirror member 221 may be reflected again by the second mirror member 222 coupled to the head-slope coupling portion 132 to travel to the photographing member 300.

A plurality of mirror members 200 are provided. The plurality of mirror members 200 are coupled to the main body 100 and configured to reflect the light reflected from the inspection position of the cylindrical battery cell 20 again toward the photographing member 300.

The mirror member 200 may include a bottom mirror member 210 and a head mirror member 220.

Referring to FIGS. 5 and 6, among the plurality of mirror members 200, that is, among the bottom mirror member 210 and the head mirror member 220, the bottom mirror member 210 may be coupled to the bottom slope 112 formed on the side of the bottom part 110.

In this case, the bottom slope 112 may be formed to have an angle at which the photographing member 300 is able to capture the beading portion 21 of the cylindrical battery cell 20, and since the bottom mirror member 210 is coupled to the bottom slope 112, the beading portion 21 of the cylindrical battery cell 20 may be captured through the photographing member 300. According thereto, the welding quality of the beading portion 21 of the cylindrical battery cell 20 may be inspected.

The head mirror member 220 may include a first mirror member 221 and a second mirror member 222. The first mirror member 221 is coupled to the head slope 131. In addition, the second mirror member 222 is coupled to the head-slope coupling portion 132.

Referring to FIG. 6, light reflected from the inspection position (e.g., the beading portion 21) of the cylindrical battery cell 20 is reflected by the bottom mirror member 210, thereby moving to the first mirror member 221, then reflected by the first mirror member 221 toward the second mirror member 222, and then reflected by the second mirror member 222, thereby reaching the photographing member 300. Accordingly, as shown in FIG. 5, the beading portion 21 of the cylindrical battery cell 20 may be captured, thereby inspecting the welding quality of the beading portion 21.

The photographing member 300 photographs the cylindrical battery cell 20 using the light reflected by the mirror members 200. The photographing member 300 may be configured in various ways, and may include, for example, various cameras, but is not limited thereto.

Referring to FIG. 5, the photographing member 300 may capture the beading portions 21 at various positions of the cylindrical battery cells 20. Here, it is possible to capture even the beading portion 21 located on the movement path where the bottom mirror member 210 is not disposed by appropriately controlling the number and inclination angles of the bottom mirror members 210.

As described above, there is an effect of inspecting the welding quality of the beading portion 21 while the cylindrical battery cells 20 move continuously without stopping.

Meanwhile, referring to FIGS. 1 to 4, a disk member 400 may be provided for the continuous movement of the cylindrical battery cells 20. One or more cylindrical battery cells 20 are mounted to the disk member 400. In addition, when the disk member 400 rotates while the cylindrical battery cells 20 are mounted to the disk member 400, the cylindrical battery cells 20 move toward the inside of the main body 100.

The disk member 400 may have one or more mounting grooves 410 formed such that the cylindrical battery cell 20 is mounted thereto, and if multiple mounting grooves 410 are provided, multiple cylindrical battery cells 20 may be inspected continuously. Accordingly, there is an effect of automating the welding quality inspection of the beading portions 21 of the cylindrical battery cells 20.

In addition, according to the first embodiment of the present disclosure, if the disk member 400 is configured in a rotary structure, there is an effect of significantly improving the compatibility with the disk member 400 of existing equipment for the cylindrical battery cells 20.

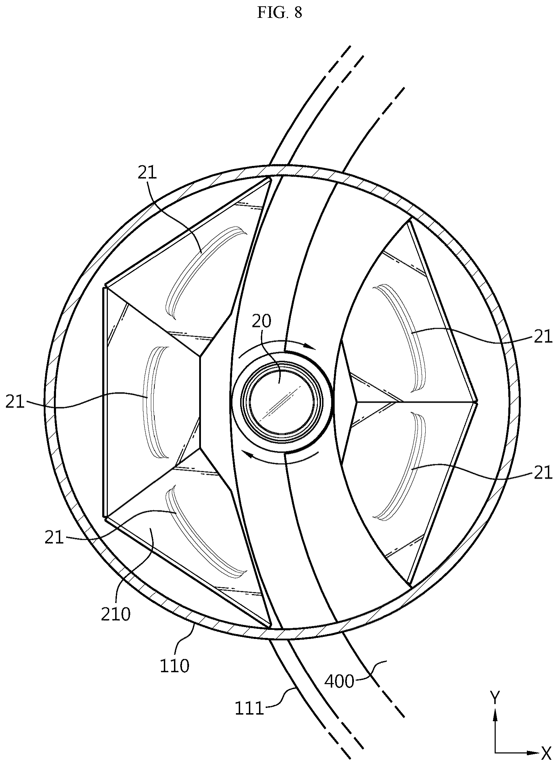

FIG. 8 is a drawing illustrating the state where an inspection position of a cylindrical battery cell is reflected by a mirror member and captured by a photographing member in a cylindrical-battery cell inspection device according to a second embodiment of the present disclosure.

The second embodiment of the present disclosure is different in structure from the first embodiment in that the cylindrical battery cell 20 rotates itself inside the main body 100 for welding quality inspection of the beading portion 21. However, the descriptions of the same configurations as the first embodiment described above are also applied to second embodiment. In addition, a description of the second embodiment applicable to the first embodiment may be applied to the first embodiment.

Referring to FIG. 8, the cylindrical battery cell 20 temporarily stops inside the main body 100. Then, the cylindrical battery cell 20 rotates on its own about the center thereof by a predetermined angle in a clockwise direction (see the arrow in FIG. 8) or counterclockwise direction and then stops. In addition, the beading portion 21 of the cylindrical battery cell 20 is captured through the photographing member 300.

Here, a cell carrier (not shown) in which the cylindrical battery cell 20 is received may be provided for self-rotation of the cylindrical battery cell 20.

Accordingly, there is an effect in which the entire beading portion 21 of the cylindrical battery cell 20 is able to be captured.

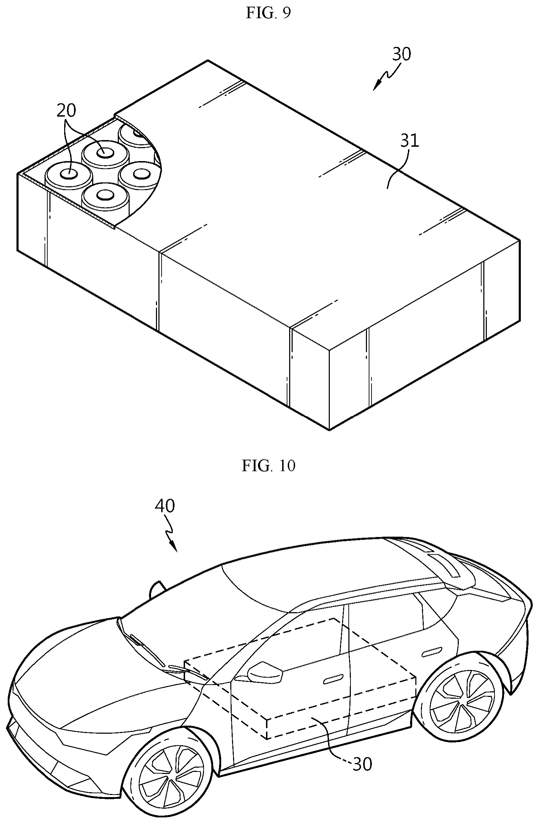

FIG. 9 is a drawing schematically illustrating the configuration of a battery pack including a cylindrical battery cell produced using a cylindrical-battery cell inspection device according to respective embodiments of the present disclosure.

Referring to FIG. 9, a battery pack 30 according to an embodiment of the present disclosure may include one or more cylindrical battery cells 20. Here, the cylindrical battery cells 20 are produced using the cylindrical-battery cell inspection device 10 according to the respective embodiments of the present disclosure described above.

In addition, the battery pack 30 may further include a pack housing 31 for storing the cylindrical battery cells 20 and various devices for controlling the charging and discharging of the cylindrical battery cell 20, such as a BMS, a current sensor, a fuse, and the like.

FIG. 10 is a drawing illustrating a vehicle including the battery pack in FIG. 9.

Referring to FIG. 10, a vehicle 40 according to an embodiment of the present disclosure may include one or more cylindrical battery cells 20 or battery packs 30. The cylindrical battery cells 20 are produced using the cylindrical-battery cell inspection device 10 according to the respective embodiments of the present disclosure described above. In addition, the battery pack 30 may include one or more cylindrical battery cells 20 described above.

Here, the vehicle 40 includes various vehicles that are designed to use electricity, such as an electric vehicle or a hybrid vehicle.

Meanwhile, although terms indicating directions such as upward, downward, left, and right are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the embodiments described above are only examples for the purpose of illustrations, not intended to limit the scope of the disclosure. In other words, the true scope of the technical idea of the present disclosure is shown in the claims, and all differences within the scope equivalent thereto should be construed as being included in the present disclosure.

### INDUSTRIAL APPLICABILITY

The present disclosure relates to a cylindrical-battery cell inspection device, a cylindrical battery cell produced using the same, and a battery pack and a vehicle including the cylindrical battery cell, and is particularly applicable to industries related to secondary batteries.

## Claims

1. A cylindrical-battery cell inspection device comprising:
a main body through which a cylindrical battery cell moves;
a plurality of mirror members coupled to the main body and configured to reflect light reflected from an inspection position of the cylindrical battery cell again; and
a photographing member configured to capture the cylindrical battery cell using the light reflected by the mirror members.

2. The cylindrical-battery cell inspection device according to claim 1
wherein the main body comprises:
a bottom part into which the cylindrical battery cell moves;
a connection part connected to the bottom part; and
a head part coupled to a top of the connection part and having the photographing member coupled thereto.

3. The cylindrical-battery cell inspection device according to claim 2,
wherein a bottom slope is formed downward on a side of the bottom part from an outer side to an inner side, and
wherein a bottom mirror member of the plurality of mirror members is coupled to the bottom slope.

4. The cylindrical-battery cell inspection device according to claim 3,
wherein the bottom slope is formed to have an angle at which the photographing member is able to capture a beading portion of the cylindrical battery cell.

5. The cylindrical-battery cell inspection device according to claim 3,
wherein the head part comprises a head mirror member coupled to reflect light reflected from the bottom mirror member toward the photographing member again.

6. The cylindrical-battery cell inspection device according to claim 5,
wherein the head part comprises:
a head slope formed at a position corresponding to the bottom slope; and
a head-slope coupling portion coupled to the head slope and disposed to face the photographing member.

7. The cylindrical-battery cell inspection device according to claim 6,
wherein the head mirror member comprises:
a first mirror member coupled to the head slope; and
a second mirror member coupled to the head-slope coupling portion, and
wherein light reflected from the inspection position of the cylindrical battery cell is reflected by the bottom mirror member, thereby traveling to the first mirror member, reflected by the first mirror member, thereby traveling to the second mirror member, and reflected by the second mirror member, thereby reaching the photographing member.

8. The cylindrical-battery cell inspection device according to claim 2,
further comprising a lighting part coupled to the connection part.

9. The cylindrical-battery cell inspection device according to claim 2,
wherein the guide is a guide wall formed as a protruding structure toward the inside of the bottom part.

10. The cylindrical-battery cell inspection device according to claim 9,
wherein the guide wall is formed as a curved surface.

11. The cylindrical-battery cell inspection device according to claim 1,
further comprising a disk member on which the cylindrical battery cell is seated and rotates so that the cylindrical battery cell moves to the main body.

12. The cylindrical-battery cell inspection device according to claim 1,
wherein the cylindrical battery cell is configured to temporarily stop inside the main body, and then rotate on its own about a center of the cylindrical battery cell.

13. A cylindrical battery cell produced using a cylindrical-battery cell inspection device according to any one of claims 1 to 12.

14. A battery pack comprising at least one cylindrical battery cell according to claim 13.

15. A vehicle comprising at least one cylindrical battery cell according to claim 13.
